# EUROPEAN PATENT SPECIFICATION

(11) **EP 0 919 407 B1**
(45) Date of publication and mention of the grant of the patent: **02.01.2004**
(21) Application number: 97933070.1
(22) Date of filing: 29.07.1997
(51) Int. Cl.: B60G 17/005

(54) **SUSPENSION DEVICE FOR EXCAVATING WORK VEHICLES AND METHOD OF CONTROLLING SAME**
AUFHÄNGUNGSVORRICHTUNG FÜR BAGGERFAHRZEUGE UND VERFAHREN ZUR STEUERUNG DERSELBEN
DISPOSITIF DE SUSPENSION POUR VEHICULES D'EXCAVATION ET PROCESSUS DE COMMANDE DUDIT DISPOSITIF

(30) Priority: 01.08.1996 JP 21808896
(43) Date of publication of application: 02.06.1999
(73) Proprietor: KOMATSU LTD., Minato-ku, Tokyo 107 (JP)
(72) Inventor: GENJI, Masaaki, Komatsu Ltd., Komatsu-shi, Ishikawa 923-03 (JP); KANAYAMA, Noboru, Komatsu Ltd., Komatsu-shi, Ishikawa 923-03 (JP)
(74) Representative: Viering, Jentschura & Partner
(86) International application number: PCT/JP1997/002633
(87) International publication number: WO 1998/005521

(56) References cited:
- EP-A- 0 518 226
- WO-A-95/00348
- DE-A- 3 934 385
- JP-A- 2 003 505
- JP-A- 2 502 620
- JP-A- 5 213 025
- JP-A- 8 058 345
- JP-U- 48 104 021
- JP-U- 57 109 007
- JP-Y2- 5 039 924
- US-A- 4 819 754
- PATENT ABSTRACTS OF JAPAN vol. 011, no. 241 (M-614), 7 August 1987 (1987-08-07) & JP 62 053209 A (KAYABA IND CO LTD), 7 March 1987 (1987-03-07)

## Description

### FIELD OF THE INVENTION

The present invention relates to a suspension for an excavating vehicle as described in the preamble of claims 1 and 5.

### BACKGROUND OF THE INVENTION

DE 39 34 385 comprises the features mentioned in the preamble of claims 1 and 5. US 4 819 754 describes a suspension system having a working and a driving mode.

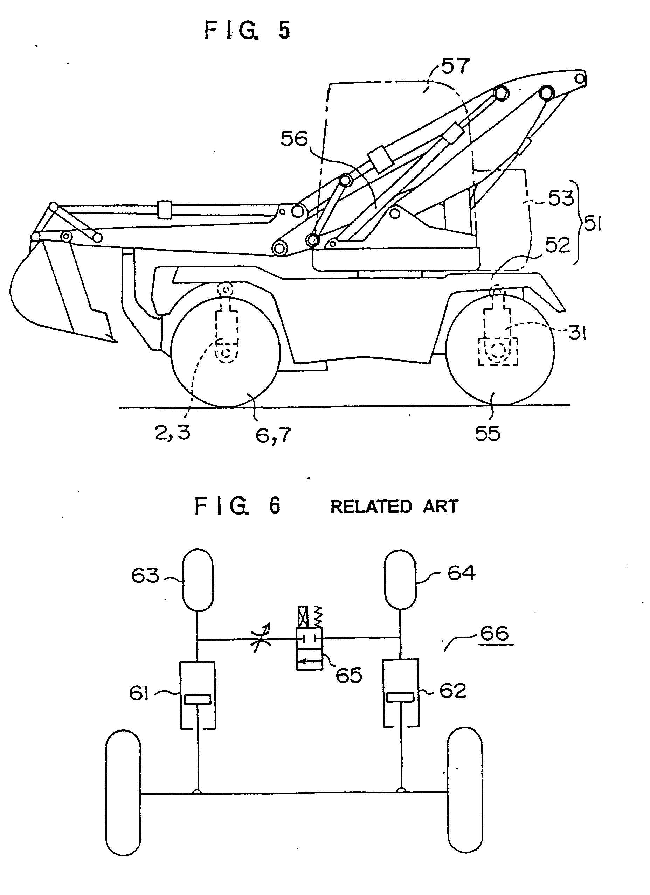

Suspensions used for vehicles and having connecting valves have been proposed in Japanese Utility Model Laid-Open Publication No. 57-109007 and Japanese Patent Laid-Open Publication No. 2-99416. Referring to Fig. 6 of the accompanying drawings, each of such suspensions is provided with accumulators 63 and 64 which are attached to left and right suspension cylinders 61 and 62, and are coupled via a connecting valve 65. According to Japanese Utility Model Laid-Open Publication No. 57-109007, the connecting valve 65 connects the right and left suspension cylinders 61 and 62 when the excavating vehicle moves on non-adjusted ground. Conversely, when the excavating vehicle moves at a high speed, the suspension cylinders 61 and 62 are disconnected in order to increase lateral rigidity and enable the vehicle to turn stably.

In Japanese Patent Laid-Open Publication No. 2-99416, the connecting valve 65 is opened when the vehicle body 66 is horizontal while the connecting valve 65 is closed when the vehicle body 66 rocks to the right and left. In other words, if the connecting valve 65 is opened while the vehicle body 66 is horizontal, a spring constant of the suspensions becomes small and improves ride quality. However, if the connecting valve 65 remains opened, the vehicle body 66 tends to roll and reduces its stability. In order to overcome this problem, the connecting valve 65 is closed assuming a time when the vehicle body 66 tends to rock to the left and right (i.e. roll), thereby increasing the spring constant of the suspensions and preventing the rolling.

The foregoing effect is remarkable in carrying vehicles such as dump trucks which move not only on non-adjusted ground but also on a road or the like at a high speed, according to Japanese Utility Model Laid-Open Publication No. 57-109007. However, a construction machine that performs excavation by maintaining the wheel loader type vehicle stationary tends to produce an unstable excavating force and cannot efficiently excavate ground when the connecting valve 65 is opened in order to reduce the spring constant of suspensions. Further, with an excavating vehicle that performs excavation while it remains stationary and moves on non-adjusted ground at a low speed, the connecting valve 65 is closed during the excavation but it is opened in order to move the vehicle on non-adjusted ground at a low speed. With the wheel loader type excavating vehicle, such opening and closing of the connecting valve 65 have to be repeated in accordance with the excavation and movement on non-adjusted ground, which adversely reduces operability and efficiency, and is troublesome to an operator.

In Japanese Patent Laid-Open Publication No. 2-99416, the connecting valve 65 remains open when the vehicle is moving at a high speed while it is horizontal, so that the vehicle rolls and rocks extensively when it makes a sharp turn, which is very dangerous. Further, a loader type excavating vehicle cannot produce a sufficient excavating force when the left and right suspension cylinders 61 and 62 are connected, as described above. Conversely, when the suspension cylinders 61 and 62 are disconnected, left and right wheels suffer from small oscillations (i.e. stroke) while the vehicle is moving on non-adjusted ground.

### SUMMARY OF THE INVENTION

The present invention has been contemplated in order to overcome the foregoing problems of the related art, and is intended to provide a suspension for an excavating vehicle that can assure high ride quality, stable moving performance at a high speed, excellent running through performance on rough ground and improved excavating efficiency, and a method of controlling such a suspension.

According to a first configuration of the invention, there is provided a suspension as described in claim 1.

When the excavating vehicle moves on a working site or on a rough road at a speed smaller than the predetermined value, the connecting valve arranged between the left and right front suspension cylinders is opened in order to increase oscillations of the front suspension so that it oscillates extensively. This is effective in allowing the suspension to cope with a rough road and improve running through performance. Further, when the excavating vehicle moves on an ordinary road or the like at a speed larger than the predetermined value, the connecting valve is closed to reduce the oscillation of the front suspension, and improve roll rigidity of the front suspension, and reliable movement at a high speed and operability of the excavating vehicle.

In accordance with a second configuration of the invention, a suspension for an excavating vehicle as described in the claim 5.

With this configuration, the controller automatically controls characteristics of the suspension in response to the signals from the mode selecting switch and the vehicle speed sensor. Specifically, the connecting circuit of the left and right suspension cylinders is opened when left and right oscillations of the suspension are necessary in order to enable the excavating vehicle to move on non-adjusted ground. Conversely, when the excavating vehicle moves at a speed equal to or larger than the predetermined value, the connecting circuit is closed in order to increase the rigidity of the suspension. Therefore, the excavating vehicle can always assure high ride quality, stable movement at a high speed, excellent running through performance, and operability.

Preferred embodiment of the invention are described in the dependent claims 2-4.

Even if there is a large difference between left and right strokes of the front suspensions while the vehicle moves on non-adjusted ground at a low speed, the rear suspension cylinders support the vehicle body, thereby suppressing the rocking of the vehicle body to the left or right. Further, the front suspension absorbs inclinations of the vehicle body caused by inclinations of non-adjusted ground, which is effective in assuring stable movement of the vehicle. For instance, a working machine installed on an upper turning body can turn and produce a large excavating force using the very rigid rear suspension cylinders.

### BRIEF DESCRIPTION OF THE DRAWINGS

Fig. 1 shows a control circuit for a front suspension unit of a suspension according to the present invention.
Fig. 2A shows a left side of a rear suspension unit of an excavating vehicle to which the present invention is applicable.
Fig. 2B shows a right side of a rear suspension unit in a further configuration.
Fig. 3 is a flowchart showing a control sequence of the front suspension unit according to the invention.
Fig. 4 is a flowchart showing another control sequence of the front suspension unit according to the invention.
Fig. 5 is a side view of an excavating vehicle to which the suspension of the invention is applicable.
Fig. 6 shows a front suspension unit of an excavating vehicle of the related art.

### BEST MODE FOR CARRYING OUT THE EMBODIMENT

The invention will be described with reference to the preferred embodiment shown in the drawings.

Referring to Fig. 5, a wheel type hydraulic shovel 51 (called the "hydraulic shovel 51") is employed as an excavating vehicle in this embodiment. The hydraulic shovel 51 includes a lower moving body 52, an upper turning body 53, front wheels 6 and 7, and rear wheels 55, 55. The upper turning body 53 has a working machine 56. The hydraulic shovel 51 excavates ground and loads excavated soil thereon using the working machine 56 with its lower moving body 52 maintained stationary, and moves on a non-adjusted site at a low speed. Further, it moves not only on adjusted working site at a speed equal to or larger than a predetermined value but also on roads at a speed equal to or larger than the predetermined value or at a high speed when moving between working sites. The hydraulic shovel 51 has a mode selecting switch 21 in a cab 57 in order to select either a driving mode Mr in which the hydraulic shovel 51 moves between working sites and a working mode Ms in which the hydraulic shovel 51 moves on a working site at a low speed, excavates ground and loads excavated soil thereon.

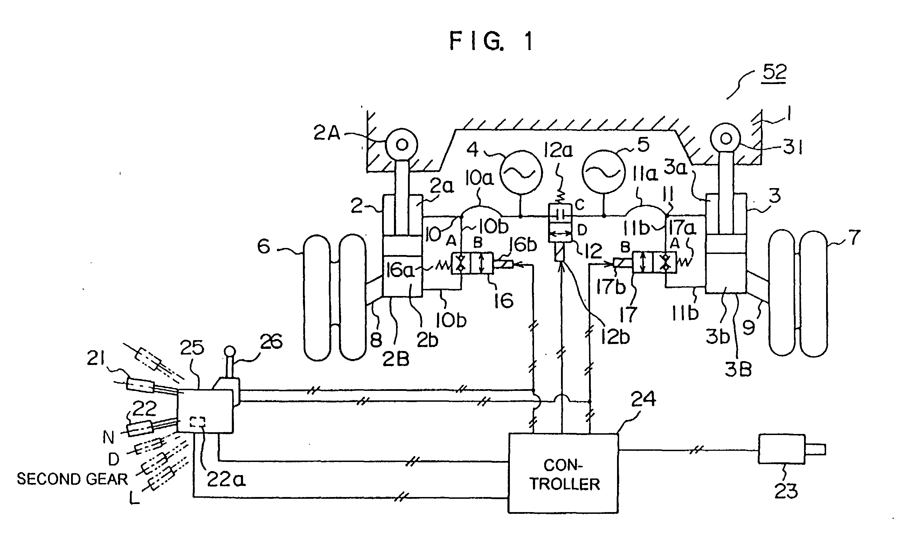

As shown in Fig. 1, a front suspension unit mainly includes: a pair of left and right front suspension cylinders 2 and 3; a pair of accumulators 4, 5; a connecting valve 12; the mode selecting switch 21; a shift lever position sensor 22a; a vehicle speed sensor 23; and a controller 24. The front suspension cylinders 2 and 3 are positioned between a chassis 1 of the lower moving body 52 and the left and right front wheels 6 and 7, respectively. The accumulators 4 and 5 are positioned at the head sides of the front suspension cylinders 2 and 3, opposite to the side of the front suspension cylinders 2 and 3 where the weight of the vehicle body is applied.

The connecting valve 12 is arranged in a path connecting the front suspension cylinders 2 and 3, and near the accumulators 4 and 5. The mode selecting switch 21 is positioned near the operator's seat in the cab 57. The shift lever position sensor 22a is attached to the shift lever 22 near the operator's seat in the cab 57. The vehicle speed sensor 23 is attached to the front wheel 6 or an output shaft of the transmission. Since the front suspension cylinders 2 and 3 are symmetrical as shown, only the left cylinder 2 will be described as a typical example.

The left front suspension cylinder 2 (called the "left suspension cylinder 2" hereinafter) has its rod end 2A positioned at the chassis 1 of the lower moving body 52 and its bottom end 2B attached to the front wheel 6. The left front wheel 6 is coupled to the left suspension cylinder 2 via an arm 8. A head chamber 2a of the left suspension cylinder 2 connects to the accumulator 4 and the connecting valve 12 via a pipe 10a forking from a branch 10, and connects to a bottom chamber 2b via a pipe 10b forking from the branch 10 and the lock valve 16. In other words, the connecting valve 12 is interposed between the left and right accumulators 4 and 5.

The lock valve 16 is a so-called suspension lock valve, and is urged, by a spring 16a, to a closed position A where the lock valve 16 disables the suspension function, and is urged, against the spring 16a, to an opened position B in response to a signal received by a solenoid 16b from a lock switch 26. Specifically, the lock valve 16 is realized by a solenoid type 2-port and 2-position selecting valve. Alternatively, the lock valve 16 may operate in response to a signal from the controller 24 in place of the signal from the lock switch 26. The connecting valve 12 is urged to a closed position C by a spring 12a, and is urged to an opened position D, against the spring 12a, in response to a signal received from the controller 24 via the solenoid 12b. The connecting valve 12 is realized by a solenoid type 2-port and 2-position selecting valve.

A control unit 20 includes the mode selecting switch 21, shift lever position sensor 22a, vehicle speed sensor 23 and controller 24. The mode selecting switch 21 is attached on an operation panel 25 near the operator's seat, and is used to select either the working mode Ms or the driving mode Mr. In the working mode Ms, the hydraulic shovel 51 remains stationary, letting its working machine 56 excavate ground and load excavated soil thereon, and moves on non-adjusted ground at the working site at a low speed. In the driving mode Mr, the hydraulic shovel 51 moves on the working site or on a road at a speed equal to or larger than the predetermined value or at a high speed.

The operator activates the shift lever 22 in order to select the neutral position N, drive position D, second gear position, low speed gear position L, rear position R, or the like. It is assumed here that the drive position D and second gear position represent high speed movement, while the low speed gear position L represents low speed movement. In this embodiment, when the mode selecting switch 21 selects the working mode Ms, the shift lever 22 is set to the neutral position N, so that the hydraulic shovel 51 stops moving, and causes the working machine 56 to excavate ground and load excavated soil thereon. The shift lever position sensor 22a of the shift lever 22 detects the selected shift position, and informs this to the controller 24. The vehicle speed sensor 23 attached near the front wheel 6 detects the speed of the hydraulic shovel 51.

The controller 24 near the operator's seat receives signals from the mode selecting switch 21, shift lever position sensor 22a and vehicle speed sensor 23, and outputs a signal to the connecting valve 12. In this embodiment, the lock switch 26 disables the suspension function when the working machine 56 performs'excavation, loading and so on. When the lock switch 26 is turned on (i.e. is set to an ON side), the lock valve 16 receives a current via its receiving part 16b and is moved to the open position B. Conversely, when the lock switch 26 is turned off (i.e. is set to an OFF side), the lock valve 16 is moved to the closed position A.

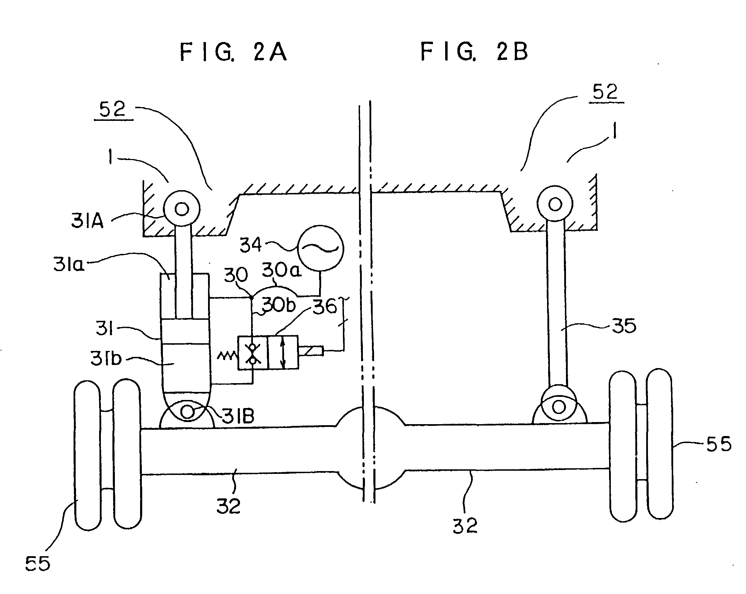

Fig. 2A shows the left side of the symmetrical rear suspension, with the right side thereof omitted. The rear suspension cylinder 31 is realized using an existing suspension. A rod end 31A of the rear suspension 31 is attached to the chassis 1 of the lower driving body 52. A bottom end 31B of the rear suspension cylinder 31 is coupled to the rear axle 32 of the rear wheels 55. The left rear wheel 55 is coupled to the rear axle 32. A head chamber 31a of the rear suspension cylinder 31 is connected to the accumulator 34 via one pipe 30a and a branch 30, and is connected to a bottom chamber 31b via the other pipe 30b and a lock valve 36. Alternatively, the lock valve 36 may be connected to the controller 24 in order to receive signals therefrom.

Fig. 2B shows only the right side of the symmetrical rear part of the vehicle body, with the left side thereof omitted. In a further configuration of the rear part of the vehicle body, a rigid member 35 is provided in place of the rear suspension cylinder 31 in order to realize a rigid suspension. The rigid member 35 connects the chassis 1 of the lower moving body 52 and the rear axle 32.

According to the foregoing configuration, the rear suspension becomes rigid, so that the rigid rear suspension cylinder 31 at the rear part of the vehicle body can support the vehicle body and prevent it from being extensively inclined to the left or right even when there is a large disparity between left and right strokes of the front suspension while the hydraulic shovel 51 is moving on non-adjusted ground at a low speed. Further, the front suspension can absorb inclination of the vehicle body, which enables stable movement of the hydraulic shovel 51. Still further, even when the lock valve 16 is at the opened position, the working machine 56 of the hydraulic shovel 51 is turned in order to excavate ground using the rigid rear suspension cylinders, which is effective in producing a high excavating force. The use of the rigid member 35 is as effective as the use of the rigid rear suspension.

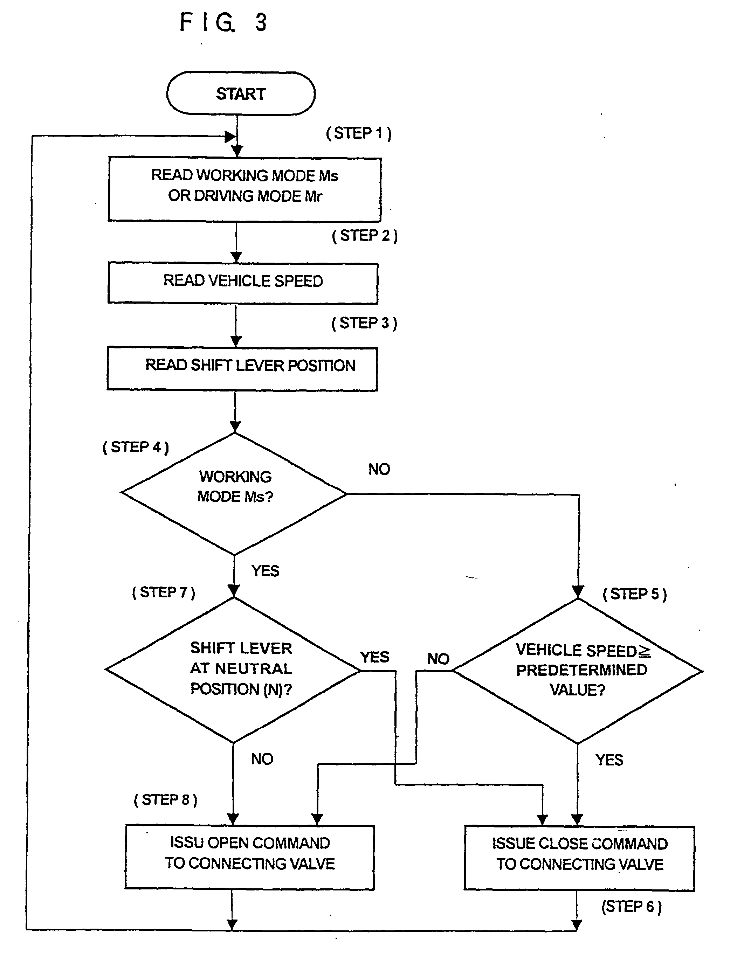

The operation of the hydraulic shovel 51 will be described with reference to a flowchart shown in Fig. 3. In step 1, either the working mode Ms or driving mode Mr is read. The vehicle speed sensor 23 reads a vehicle speed in step 2. In step 3, the shift lever position sensor 22a reads a shift position selected by the shift lever 22. In step 4, it is determined whether or not the selected mode is the working mode Ms. If not, i.e. when the driving mode Mr is selected, a control process advances to step 5. In step 5, it is determined whether or not the detected vehicle speed is equal to or larger than the predetermined value (e. g. 5Km/H). If the vehicle speed is equal to or above the predetermined value, the control process advances to step 6.

In step 6, the controller 24 does not output any signal to the connecting valve 12. The connecting valve 12 is urged to the closed position C by the spring 12a. As a result, a circuit connecting the pipes 10a and 11a shown in Fig. 1 is closed. Concurrently with this, the head chamber 2a and bottom chamber 2b of the suspension cylinder 2 are connected to the accumulator 4 when the lock valve 16 is at the opened position B and the upper and lower sides of the front suspension are connected. Therefore, the rigidity of the front suspension is somewhat increased, and the accumulator 4 absorbs the small vertical stroke difference or vibrations. It is possible to reduce rolling (inclination) of the vehicle body when the hydraulic shovel 51 turns at a high speed, and absorb minute vibrations of the vehicle body during the high speed movement. This improves ride quality and stable movement.

When selection of the working mode Ms is confirmed in step 4, the control process advances to step 7, where it is checked whether or not the shift lever 22 is at the neutral position N. If so, the control process advances to step 6. In step 6, the controller 24 does not output any signal to the connecting valve 12 since the working mode Ms has been selected and the neutral position N has been selected. The connecting valve 12 is urged to the closed position C by the spring 12a. Therefore, the connecting circuit is closed as described previously, which increases the rigidity of the front suspension. Even when the lock valve 16 is at the opened position, the excavation is carried out using the rigid front suspension cylinder 2, thereby producing a high excavating force.

Conversely, when the selected shift position is not the neutral position N, the control process advances to step 8. In step 8, since the neutral position N is not selected, the controller 24 outputs a signal to the connecting valve 12, which is moved to the opened position D against the spring 12a. Therefore, the connecting circuit is opened as described above, and the front suspension extensively oscillates to the left and right, thereby improving ride quality and stable movement of the hydraulic shovel 51 on non-adjusted ground.

When the hydraulic shovel 51 is determined to move at a speed equal to or lower than the predetermined value in step 5, the control process advances to step 8. In this state, the connecting valve 12 is urged to the opened position D as in the movement on non-adjusted ground, thereby increasing the left and right oscillations of the front suspension. The control process goes to steps 8 and 6, and then returns to step 1.

The working mode and the driving mode will be separately described.

### (1) Working mode Ms

i) When the hydraulic shovel 51 performs the excavation: When the mode selecting switch 21 is set to the working mode Ms, a signal indicative of this is transmitted to the controller 24. In response to the signal indicative of the selected working mode Ms, the controller 24 outputs a closing signal to the connecting valve 12 when the shift lever position sensor 22a detects that the shift lever 22 is set to the neutral position N. It is determined whether or not the hydraulic shovel 51 is stationary when the signal from the vehicle speed sensor 23 indicates a speed of substantially zero, and/or when the signal from the shift lever position sensor 22a indicates the neutral position N. Alternatively, when the vehicle speed is found to be substantially zero for a predetermined period of time or longer or when the shift lever position sensor 22a detects that the shift lever 22 has been at the neutral position N for the predetermined period of time or longer, the hydraulic shovel 51 may be considered to remain stationary and to perform the excavation and loading. Further, the operation of an operation lever (not shown) of the working machine 56 may be detected for the foregoing determination.
   In order to disable the suspension function, the lock switch 26 is operated, thereby moving the lock valve 16 to the closed position A. Alternatively, when detecting the signal indicative of the working mode Ms and the signal from the shift lever position sensor 22a, the controller 24 may set the lock valve 16 to the closed position A. In this state, all the connecting circuits of the front suspension are closed in order to increase the rigidity of the front suspension, which enables a large excavating force to be produced by the rigid front suspension.
ii) When the hydraulic shovel 51 moves at a low speed: In response to the signal indicative of the working mode Ms and the signal from the shift lever position sensor 22a, the controller 24 outputs an open signal to the connecting valve 12 when the vehicle speed is low. The hydraulic shovel 51 is determined to move at a low speed when the signal of the vehicle speed sensor 23 indicates the predetermined value (e.g. 5Km/H) or when the shift lever position sensor 22a issues a signal indicative of a low speed gear position (e.g. first or second gear position). Therefore, all the connecting circuits are opened, left and right oscillations of the front suspension are increased, and the spring constant becomes small, which improves the ride quality and stable movement on non-adjusted ground.

### (2) Driving mode Mr

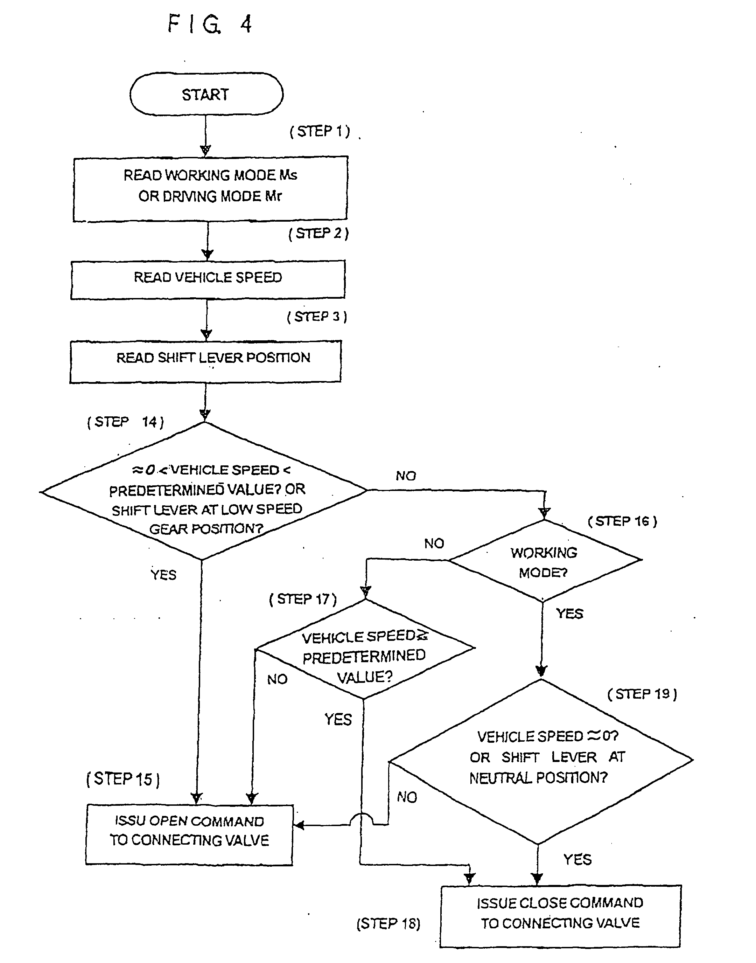

i) When the vehicle speed is equal to or larger than the predetermined value: In response to the signal indicative of the driving mode Mr and the signal from the vehicle speed sensor 23, the controller 24 outputs the close signal to the connecting valve 12 when the vehicle speed is equal or above the predetermined value. In this case, the vehicle speed is determined to be equal to or larger than the predetermined value (e.g. 5Km/H), or when the shift lever position sensor 22a detects that the shift lever is set to a high speed gear position (i.e. a third or fourth gear position). Alternatively, when the lock switch 26 is operated to move the lock valve 16 to the opened position B, the upper and lower sides of the front suspension are connected, thereby connecting the head chamber 2a and bottom chamber 2b of the front suspension to the accumulator 4. In this state, vibrations applied to the left and right front wheels 6 and 7 are absorbed by the accumulators 4 and 5, thereby increasing the lateral rigidity of the vehicle, which enables stable driving and turning at a high speed.
ii) When the vehicle speed is less than the predetermined value: In such a case, the controller 24 provides the connecting valve 12 with the open signal in response to the driving mode Mr signal and the signal from the vehicle speed sensor 23. When moving at a speed less than the predetermined value (e.g. 5Km/H), the hydraulic shovel 51 is determined to be at a low speed. In this state, the connecting circuits are connected, making the head chambers 2a and 3a of the suspension cylinders 2 and 3 communicate with each other, and making the head and bottom chambers 2a and 2b of the front suspension communicate with each other. Therefore, the left and right front wheels 6 and 7 can oscillate extensively, which enables the stable movement of the hydraulic shovel 51 on non-adjusted ground.
   Another control process will be described with reference to Fig. 4. The control process in steps 1 to 3 is identical to that shown in Fig. 3. In step 14, it is determined whether or not the vehicle speed is less than the predetermined value, and whether or not the shift lever is set to the low speed gear position. When the vehicle speed is determined to be less than the predetermined speed (except for the speed of substantially 0 where the vehicle is stationary) or when the shift lever 22 is set to the low speed gear position, the control process advances to step 15. In step 15, the controller 24 provides the connecting valve 12 with the open signal. Alternatively, the controller 24 may output the open signal to the lock valve 16, thereby setting the lock valve 16 to the opened position B. Thereafter, all the connecting circuits are opened as described above, thereby increasing left and right oscillations of the front suspension, reducing the spring constant, and improving the ride quality and stable movement on non-adjusted ground.
   Conversely, the control process advances to step 16 when the vehicle speed is determined, in step 14, to be equal to or larger than the predetermined value or substantially zero, and when the shift lever 22 is set to the high speed gear position or the neutral position N. In step 16, it is determined whether or not the working mode Ms has been selected. If not, i.e. the driving mode Mr has been selected, the control process advances to step 17. In step 17, it is determined whether or not the vehicle speed is equal to or larger than the predetermined value (e.g. 5Km/H). If not, i.e. if the vehicle speed is less than the predetermined value, the control process advances to step 15. Therefore, the controller 24 outputs the open signal to the connecting valve 12.
   In step 17, when the vehicle speed is equal to or larger than the predetermined value, the control process advances to step 18, so that the controller 24 provides the connecting valve 12 with the close signal. Alternatively, the controller 24 may output the close signal to the lock valve 16 in order to set it to the closed position A. Thereafter, vibrations applied to the left and right wheels 6 and 7 are absorbed by the accumulators 4 and 5, so that the hydraulic shovel 51 becomes laterally rigid, and can drive or turn in a reliable manner at a high speed.
   In step 16, when the working mode Ms has been selected, the control process advances to step 19. In step 19, it is determined whether or not the vehicle speed is zero or substantially zero, or whether or not the shift lever 22 has been set to the neutral position N. If none of the foregoing requirements are satisfied in step 19, the control process returns to step 15. Conversely, when any of the foregoing requirements is met, i.e. when the hydraulic shovel 51 remains stationary or when the shift lever 22 has been set to the neutral position N, the control process advances to step 18.

### INDUSTRIAL APPLICABILITY

The present invention is intended to provide the suspension for an excavating vehicle that assures high ride quality, reliable movement at a high speed, high running through performance and excavating and loading efficiency on non-adjusted ground.

## Claims

1. A suspension for an excavating vehicle, comprising:
a pair of left and right front suspension cylinders (2, 3) ;
a pair of left and right accumulators (4, 5) respectively disposed in connecting paths between bottom chambers (2b, 3b) and head chambers (2a, 3a) of said pair of front suspension cylinders (2, 3);
a pair of left and right lock valves (16, 17) respectively disposed in the connecting paths between said bottom chambers (2b, 3b) and said head chambers (2a, 3a), and connecting or disconnecting said bottom and head chambers;
a connecting valve (12) disposed in a path connecting said connecting paths between said bottom chambers (2b, 3b) and said head chambers (2a, 3a) and connecting or disconnecting said connecting paths between said bottom chambers (2b, 3b) and said head chambers (2a, 3a);
a vehicle speed sensor (23) detecting the speed of the vehicle; and
**characterized in that**, the suspension comprises:
a mode selecting switch (21) selecting either a working mode (Ms) or a driving mode (Mr), in the working mode (Ms) the vehicle performing at least moving on a working site at a low speed, or excavating ground and loading excavated soil thereon, in the driving mode (Mr) the vehicle moving on a road or the like, and that
in the driving mode (Mr), when a vehicle speed is smaller than a predetermined value, a controller (24) opens said pair of lock valves (16, 17), opens said connecting valve (12), connects said pair of front suspension cylinders (2, 3) and increases left and right oscillations of said front suspension cylinders (2, 3), but when the vehicle speed is equal to or larger than the predetermined value, said controller (24) opens said pair of lock valves (16, 17), closes said connecting valve (12) and disconnects said pair of front suspension cylinders (2, 3), thereby enabling said pair of front suspension cylinders (2, 3) to operate independently.

2. The suspension according to claim 1, further comprising:
shift means (22) for selecting forward or backward movement of the excavating vehicle and a shift position of a transmission, wherein
in the working mode (Ms), said controller (24) opens said connecting valve (12) and connects said pair of front suspension cylinders (2, 3) when a signal from said shift means (22) does not indicate a neutral position.

3. The suspension according to claim 2, wherein
in the working mode (Ms), said controller (24) closes said connecting valve (12) and disconnects said pair of front suspension cylinders (2, 3) when a signal from said shift means (22) indicates a neutral position.

4. The suspension according to claim 2 or 3, further comprising:
a pair of left and right rear suspension cylinders (31);
a pair of left and right accumulators (34) connected to said pair of rear suspension cylinders (31); and
lock valves (36) disposed between bottom chambers (31b) and head chambers (31a) of said rear suspension cylinders (31), wherein
said lock valves (36) for said rear suspension cylinders (31) disconnect said head chambers (31a) from said bottom chambers (31b) and increase roll stiffness of left and right sides of the excavating vehicle when the working mode (Ms) is selected or when the vehicle speed is less than the predetermined value.

5. A suspension for an excavating vehicle having a working mode (Ms) in which the vehicle performs at least moving on a working site at a low speed, or excavating ground and loading excavated soil thereon, and a driving mode (Mr) in which the vehicle moves on a road or the like, **characterized by**
a pair of left and right front suspension cylinders (2, 3) ;
a pair of left and right accumulators (4, 5) respectively disposed in connecting paths between bottom chambers (2b, 3b) and head chambers (2a, 3a) of said pair of front suspension cylinders (2, 3);
a connecting valve (12) disposed in a path connecting said connecting paths between said bottom chambers (2b, 3b) and said head chambers (2a, 3a), and connecting or disconnecting said connecting paths between said bottom and head chambers;
a mode selecting switch (21) for selecting either the driving or working mode;
a vehicle speed sensor (23) for detecting a vehicle speed;
shift means (22) for selecting forward or backward movement, and a shift position of a transmission;
a shift lever position sensor (22a) for detecting the selected shift position; and caracterized in that, the suspension comprises
a controller (24)
for closing said connecting valve (12) when said mode selecting switch (21) selects the working mode (Ms) and a signal from said vehicle speed sensor (23) indicates a vehicle speed of substantially zero or a signal from said shift lever position sensor (22a) indicates a neutral position,
for opening said connecting valve (12) when said mode selecting switch (21) selects either the working mode or driving mode and a signal from said vehicle speed sensor (23) indicates a vehicle speed lower than the predetermined value but higher than substantially zero or a signal from said shift lever position sensor (22a) indicates a low speed gear position, and
for closing said connecting valve (12) when said mode selecting switch (21) selects the driving mode (Mr) and a signal from said vehicle speed sensor (23) indicates a vehicle speed equal to or larger than the predetermined value or a signal from said shift lever position sensor (22a) indicates a high speed gear position.

## Patentansprüche

1. Aufhängung für ein Baggerfahrzeug, aufweisend:
ein Paar linke und rechte vordere Aufhängungszylinder (2, 3);
ein Paar linke und rechte Speicher (4, 5), die jeweils in Verbindungspfaden zwischen Bodenkammern (2b, 3b) und Kopfkammern (2a, 3a) des Paares vorderer Aufhängungszylinder (2, 3) angeordnet sind;
ein Paar linke und rechte Sperrventile (16, 17), die jeweils in den Verbindungspfaden zwischen den Bodenkammern (2b, 3b) und den Kopfkammern (2a, 3a) angeordnet sind und die Boden- und Kopfkammern verbinden oder trennen;
ein Zuschaltventil (12), das in einem Pfad angeordnet ist, der die Verbindungspfade zwischen den Bodenkammern (2b, 3b) und den Kopfkammern (2a, 3a) verbindet, und die Verbindungspfade zwischen den Bodenkammern (2b, 3b) und den Kopfkammern (2a, 3a) verbindet oder trennt;
ein Fahrzeuggeschwindigkeitssensor (23), der die Geschwindigkeit des Fahrzeuges erfasst; und **gekennzeichnet dadurch, dass** die Aufhängung aufweist:
einen Moduswählschalter (21), der entweder einen Arbeitsmodus (Ms) oder einen Fahrmodus (Mr) auswählt, wobei in dem Arbeitsmodus (Ms) das Fahrzeug zumindest eine Bewegung auf einer Baustelle mit einer niedrigen Geschwindigkeit durchführt oder Boden aushebt und ausgehobenes Erdreich darauf lädt, wobei in dem Fahrmodus (Mr) sich das Fahrzeug auf einer Straße oder dergleichen bewegt, und dass
in dem Fahrmodus (Mr), wenn eine Fahrzeuggeschwindigkeit geringer als ein vorbestimmter Wert ist, eine Steuereinrichtung (24) das Paar Sperrventile (16, 17) öffnet, das Zuschaltventil (12) öffnet, das Paar vordere Aufhängungszylinder (2, 3) verbindet und linke und rechte Schwingungen von den vorderen Aufhängungszylindern (2, 3) erhöht, aber wenn die Fahrzeuggeschwindigkeit gleich oder größer als der vorbestimmte Wert ist, die Steuereinrichtung (24) das Paar Sperrventile (16, 17) öffnet, das Zuschaltventil (12) schließt und das Paar vordere Aufhängungszylinder (2, 3) trennt, wodurch ermöglicht wird, das Paar vordere Aufhängungszylinder (2, 3) unabhängig zu betätigen.

2. Aufhängung gemäß Anspruch 1, ferner aufweisend:
Schaltmittel (22) zum Auswählen einer Vorwärts- oder Rückwärtsbewegung des Baggerfahrzeuges und einer Schaltposition eines Getriebes, wobei
in dem Arbeitsmodus (Ms) die Steuereinrichtung (24) das Zuschaltventil (12) öffnet und das Paar vordere Aufhängungszylinder (2, 3) verbindet, wenn ein Signal von den Schaltmitteln (22) keine Neutralposition anzeigt.

3. Aufhängung gemäß Anspruch 2, wobei
in dem Arbeitsmodus (Ms) die Steuereinrichtung (24) das Zuschaltventil (12) schließt und das Paar vordere Aufhängungszylinder (2, 3) trennt, wenn ein Signal von den Schaltmitteln (22) eine Neutralposition anzeigt.

4. Aufhängung gemäß Anspruch 2 oder 3, ferner aufweisend:
ein Paar linke und rechte hintere Aufhängungszylinder (31) ;
ein Paar linke und rechte Speicher (34, die mit dem Paar hintere Aufhängungszylinder (31) verbunden sind; und
Sperrventile (36), die zwischen Bodenkammern (31b) und Kopfkammern (31a) der hinteren Aufhängungszylinder (31) angeordnet sind, wobei
die Sperrventile (36) für die hinteren Aufhängungszylinder (31) die Kopfkammern (31a) von den Bodenkammern (31b) trennen und die Rollsteifigkeit der linken und rechten Seite des Baggerfahrzeuges erhöhen, wenn der Arbeitsmodus (Ms) ausgewählt ist oder wenn die Fahrzeuggeschwindigkeit geringer als der vorbestimmte Wert ist.

5. Aufhängung für ein Baggerfahrzeug, mit einem Arbeitsmodus (Ms), in welchem das Fahrzeug zumindest eine Bewegung auf einer Baustelle mit einer geringen Geschwindigkeit durchführt oder Boden aushebt und ausgehobenes Erdreich darauf lädt, und einem Fahrmodus (Mr), in welchem sich das Fahrzeug auf einer Straße oder dergleichen bewegt, **gekennzeichnet durch**
ein Paar linke und rechte vordere Aufhängungszylinder (2', 3) ;
ein Paar linke und rechte Speicher (4, 5), die jeweils in Verbindungspfaden zwischen Bodenkammern (2b, 3b) und Kopfkammern (2a, 3a) des Paares vorderer Aufhängungszylinder (2, 3) angeordnet sind;
ein Zuschaltventil (12), das in einem Pfad angeordnet ist, der die Verbindungspfade zwischen den Bodenkammern (2b, 3b) und den Kopfkammern (2a, 3a) verbindet, und die Verbindungspfade zwischen den Bodenkammern und den Kopfkammern verbindet oder trennt;
einen Moduswählschalter (21) zum Auswählen entweder des Fahr- oder Arbeitsmodus;
einen Fahrzeuggeschwindigkeitssensor (23) zum Erfassen einer Fahrzeuggeschwindigkeit;
Schaltmittel (22) zum Auswählen einer Vorwärts- oder Rückwärtsbewegung und einer Schaltposition eines Getriebes;
einen Schalthebelpositionssensor (22a) zum Erfassen der ausgewählten Schaltposition; und **dadurch** gekennzeichnet, dass die Aufhängung aufweist:
eine Steuereinrichtung (24)
zum Schließen des Zuschaltventils (12), wenn der Moduswählschalter (21) den Arbeitsmodus (Ms) auswählt und ein Signal von dem Fahrzeuggeschwindigkeitssensor (23) eine Fahrzeuggeschwindigkeit von im Wesentlichen Null anzeigt oder ein Signal von dem Schalthebelpositionssensor (22a) eine Neutralposition anzeigt,
zum Öffnen des Zuschaltventils (12), wenn der Moduswählschalter (21) entweder den Arbeitsmodus oder den Fahrmodus auswählt und ein Signal von dem Fahrzeuggeschwindigkeitssensor (23) eine Fahrzeuggeschwindigkeit geringer als den vorbestimmten Wert, aber höher als im Wesentlichen Null anzeigt oder ein Signal von dem Schalthebelpositionssensor (22a) eine Niedriggeschwindigkeits-Gangposition anzeigt, und
zum Schließen des Zuschaltventils (12), wenn der Moduswählschalter (21) den Fahrmodus (Mr) auswählt und ein Signal von dem Fahrzeuggeschwindigkeitssensor (23) eine Fahrzeuggeschwindigkeit gleich oder größer als den vorbestimmten Wert anzeigt oder ein Signal von dem Schalthebelpositionssensor (22a) eine Hochgeschwindigkeits-Gangposition anzeigt.

## Revendications

1. Suspension pour un véhicule d'excavation comprenant :
une paire de cylindres de suspension avant de gauche et de droite (2, 3);
une paire d'accumulateurs (4, 5) gauche et droit disposés respectivement sur des trajets de raccordement entre des chambres inférieures (2b, 3b) et des chambres supérieures (2a, 3a) de ladite paire de cylindres de suspension avant (2, 3);
une paire de soupapes de blocage gauche et droite (16, 17) disposées respectivement sur les trajets de raccordement entre lesdites chambres inférieures (2b, 3b) et lesdites chambres supérieures (2a, 3a) et raccordant ou déconnectant ladite chambre inférieure et ladite chambre supérieure;
une soupape de raccordement (12) disposée sur un trajet raccordant lesdits trajets de raccordement entre lesdites chambres inférieures (2b, 3b) et lesdites chambres supérieures (2a, 3a) et raccordant ou déconnectant lesdits trajets de raccordement entre lesdites chambres inférieures (2b, 3b) et lesdites chambres supérieures (2a, 3a);
un capteur (23) de la vitesse du véhicule, qui détecte la vitesse du véhicule; et
**caractérisée en ce que** la suspension comprend:
un commutateur de sélection de mode (21) sélectionnant soit un mode de travail (Ms), soit un mode d'entraînement (Mr), et dans le mode de travail (Ms), le véhicule exécutant au moins un déplacement sur un site de travail à une faible vitesse ou excavant le sol et chargeant le sol excavé sur lui-même lors du mode de travail (Ms), alors que dans le mode d'entraînement (Mr), le véhicule se déplace sur une route ou analogue, et que
dans le mode d'entraînement (Mr), lorsqu'une vitesse du véhicule est inférieure à une valeur prédéterminée, un contrôleur (24) ouvre ladite paire de soupapes de blocage (16, 17), ouvre ladite soupape de raccordement (12), raccorde ladite paire de cylindres de suspension avant (2, 3) et augmente des oscillations à gauche et à droite desdits cylindres de suspension avant (2, 3), mais, lorsque la vitesse du véhicule est égale ou supérieure à la valeur prédéterminée, ledit contrôleur (24) ouvre ladite paire de soupapes de blocage (16, 17), ferme ladite soupape de raccordement (12) et débranche ladite paire de cylindres de suspension (2, 3), ce qui permet de faire fonctionner, de façon indépendante, ladite paire de cylindres de suspension avant (2, 3).

2. Suspension selon la revendication 1, comprenant en outre:
des moyens de changement de vitesse (22) pour sélectionner un mouvement de marche avant ou de marche arrière du véhicule d'excavation et une position de changement de commutation d'une transmission, dans laquelle
dans le mode de travail (Ms), ledit contrôleur (24) ouvre ladite soupape de raccordement (12) et raccorde ladite paire de cylindres de suspension avant (2, 3) lorsqu'un signal provenant dudit moyen de changement de vitesse (22) n'indique pas une position neutre.

3. Suspension selon la revendication 2, dans laquelle, dans le mode de travail (Ms), ledit contrôleur (24) ferme ladite soupape de raccordement (12) et débranche ladite paire de cylindres de suspension avant (2, 3) lorsqu'un signal délivré par lesdits moyens de changement de vitesse (22) indique une position neutre.

4. Suspension selon la revendication 2 ou 3, comprenant en outre:
une paire de cylindres de suspension arrière gauche et droit (31);
une paire d'accumulateurs gauche et droit (34) raccordés à ladite paire de cylindres de suspension arrière (31); et
des soupapes de blocage (36) disposées entre des chambres intérieures (31b) et des chambres supérieures (31a) desdits cylindres de suspension arrière (31), et dans laquelle
lesdites soupapes de blocage (36) pour lesdits cylindres de suspension arrière (31) déconnectent lesdites chambres supérieures (31a) desdites chambres inférieures (31b) et augmentent la rigidité au roulis desdits côtés gauche et droit du véhicule d'excavation lorsque le mode de travail (Ms) est sélectionné ou lorsque la vitesse du véhicule est inférieure à la valeur prédéterminée.

5. Suspension pour un véhicule d'excavation comportant un mode de travail (Ms), dans lequel le véhicule exécute au moins un déplacement sur un site de travail à faible vitesse, ou réalise l'excavation du sol et le chargement du sol excavé sur lui-même, et un mode d'entraînement (Mr), dans lequel le véhicule se déplace sur une route ou analogue, **caractérisée par**
une paire d'accumulateurs de suspension avant gauche et droit (2, 3);
une paire d'accumulateurs gauche et droite (4, 5) disposés respectivement sur des trajets de raccordement entre des chambres inférieures (2b, 3b) et des chambres supérieures (2a, 3a) de ladite paire de cylindres de suspension avant (2, 3);
une soupape de raccordement (12) disposée sur un trajet raccordant lesdits trajets de raccordement entre lesdites chambres inférieures (2b, 3b) et lesdites chambres supérieures (2a, 3a) et raccordant ou déconnectant lesdits trajets de raccordement entre lesdites chambres inférieures et lesdites chambres supérieures;
un commutateur de sélection de mode (21) pour sélectionner le mode d'entraînement ou le mode de travail;
un capteur (23) de la vitesse (22) du véhicule, servant à détecter une vitesse du véhicule; et
des moyens de changement de vitesse pour sélectionner un mode de marche avant ou de marche arrière, et une position de commutation d'une transmission;
un capteur (22a) de la position du levier de changement de vitesse pour détecter la position de changement de vitesse sélectionnée; et
caractérisée en ce la suspension comprend
un contrôleur (24)
servant à fermer ladite soupape de raccordement (12) lorsque ledit commutateur de sélection de mode (22) sélectionne le mode de travail (Ms), et un signal délivré par ledit capteur (23) de la vitesse du véhicule indique une vitesse du véhicule essentiellement nulle et un signal provenant dudit capteur (22a) de la position du levier de changement de vitesse indique une position neutre,
pour ouvrir ladite soupape de raccordement (12) lorsque ledit commutateur de sélection de mode (21) sélectionne soit le mode de travail, soit le mode d'entraînement et un signal provenant dudit capteur (23) de la vitesse du véhicule indique une vitesse du véhicule inférieure à la valeur prédéterminée, mais supérieure à une valeur essentiellement nulle, ou un signal provenant dudit capteur (22a) de la position du levier de changement de vitesse indique une position d'engrenage à faible vitesse, et
pour fermer ladite soupape de raccordement (12) lorsque ledit commutateur de sélection de mode (21) sélectionne le mode d'entraînement (Mr) et qu'un signal provenant dudit capteur (23) de la vitesse du véhicule indique une vitesse du véhicule égale ou supérieure à la valeur prédéterminée, ou qu'un signal provenant dudit capteur (22a) de la position du levier de changement de vitesse indique une position d'engrenage à grande vitesse.
